(19) **Europäisches Patentamt / European Patent Office / Office européen des brevets**

(11) **EP 2 596 543 B1**

(12) **FASCICULE DE BREVET EUROPEEN**

(45) Date de publication et mention
de la délivrance du brevet:
**20.01.2016 Bulletin 2016/03**

(21) Numéro de dépôt: **11743112.2**

(22) Date de dépôt: **13.07.2011**

(51) Int Cl.:
*H01M 10/625* (2014.01)          *H01M 10/6563* (2014.01)
*H01M 16/00* (2006.01)          *H01M 10/613* (2014.01)
*H01M 10/667* (2014.01)          *B60L 11/18* (2006.01)

(86) Numéro de dépôt international:
**PCT/FR2011/051672**

(87) Numéro de publication internationale:
**WO 2012/017151 (09.02.2012 Gazette 2012/06)**

(54) **PROCEDE POUR LE REFROIDISSEMENT D'UN MOYEN DE STOCKAGE D'ENERGIE ELECTRIQUE**

VERFAHREN ZUR KÜHLUNG EINER STROMSPEICHERVORRICHTUNG

METHOD FOR COOLING AN ELECTRICITY STORAGE MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2010 FR 1055876**

(43) Date de publication de la demande:
**29.05.2013 Bulletin 2013/22**

(73) Titulaire: **Peugeot Citroën Automobiles SA 78140 Vélizy Villacoublay (FR)**

(72) Inventeurs:
• **SABRIE, Julien**
  **F-75013 Paris (FR)**

• **RIMAUX, Stephane**
  **F-92190 Meudon (FR)**
• **CADILHAC, Thomas**
  **F-92130 Issy Les Moulineaux (FR)**

(74) Mandataire: **Rosenberg, Muriel Sylvie Peugeot Citroën Automobiles SA Propriété Industrielle - LG 081 18 rue des Fauvelles 92250 La Garenne Colombes (FR)**

(56) Documents cités:
**US-A1- 2009 024 252**

Printed by Jouve, 75001 PARIS (FR)

**Description**

L'invention concerne un dispositif et un procédé pour le refroidissement d'un moyen de stockage d'énergie électrique, notamment une batterie. Elle concerne également un véhicule, notamment automobile, comprenant un tel dispositif, ledit véhicule comprenant un groupe motopropulseur électrique.

Le groupe motopropulseur est alimenté par des moyens de stockage d'énergie électrique à haut potentiel énergétique, lesquels peuvent se présenter sous la forme d'une batterie, dite haute tension, ou encore d'une pile à combustible. Pour préserver la durée de vie de ces moyens, ceux-ci doivent être refroidis pour les maintenir dans une plage de température acceptable pour les composants qu'ils contiennent.

On connaît du document US 2009 024 252 un véhicule comprenant une batterie haute tension, une batterie auxiliaire basse tension, un ventilateur alimenté par la batterie basse tension, un transformateur pour recharge la batterie auxiliaire à partie de la batterie haute tension et un moteur électrique alimenté par la batterie haute tension.

Lorsque le véhicule est en fonctionnement, une partie de l'énergie électrique délivrée par les moyens de stockage est utilisée pour leur propre refroidissement, lequel peut être réalisé selon différentes méthodes telles que la circulation d'un fluide caloporteur dans un circuit de refroidissement ou par le brassage, à l'aide d'un ventilateur, d'un flux d'air. Une difficulté de mise en oeuvre réside dans la poursuite de ce refroidissement lorsque le véhicule est à l'arrêt, plus particulièrement lorsque le groupe motopropulseur a été fortement sollicité dans les instants précédant l'arrêt du véhicule et que les moyens de stockage d'énergie ont été portés à une température élevée. Or, pour des raisons de sécurité, ces moyens à haut potentiel énergétique ne peuvent continuer à débiter de l'énergie pour assurer leur refroidissement lorsque le véhicule est à l'arrêt.

Les moyens de stockage d'énergie électrique à haut potentiel énergétique sont dits en fonctionnement lorsqu'ils délivrent un courant électrique dans un circuit nécessairement fermé. Ils ne sont plus en fonctionnement lorsque le circuit électrique dont ils font partie est ouvert.

La présente invention vise à remédier aux inconvénients de l'art antérieur par un procédé pour le refroidissement de moyens de stockage d'énergie électrique à haut potentiel énergétique qui comprend :

-    une étape de refroidissement des moyens de stockage lorsque ceux-ci sont en fonctionnement et délivrent un courant électrique dans un circuit de puissance ;

-    une étape de refroidissement des moyens de stockage lorsqu'ils ne sont plus en fonctionnement, cette étape mettant en oeuvre une batterie dite basse tension.

Avantageusement ce procédé comprend, lorsque les moyens de stockage sont en fonctionnement, des étapes consistant à :

    a. mesurer la température des moyens de stockage à haut potentiel énergétique lorsque lesdits moyens sont en fonctionnement ;

    b. déterminer un intervalle de temps jusqu'à la prochaine coupure de fonctionnement des moyens de stockage à haut potentiel énergétique ;

    c. extrapoler la température atteinte par lesdits moyens de stockage lors de ladite prochaine coupure de fonctionnement ;

    d. calculer l'énergie nécessaire pour ramener lesdits moyens de stockage à une température nominale définie après la coupure de fonctionnement ;

    e. mesurer l'état de charge de la batterie basse tension pour en déduire un besoin de charge en regard de l'énergie nécessaire déterminée à l'étape d ainsi que le temps de charge nécessaire pour effectuer une charge correspondant à ce besoin ;

    f. comparer le temps de charge nécessaire avec l'intervalle de temps déterminé à l'étape b ;

    g. déclencher la charge de la batterie basse tension si le temps de charge est supérieur ou égal à l'intervalle de temps déterminé à l'étape b.

Ainsi, ce procédé permet d'optimiser la charge de la batterie basse tension en maintenant ladite charge au strict nécessaire pour le refroidissement des moyens de stockage à haut potentiel énergétique et au meilleur rendement de la batterie basse tension. Il limite ainsi le prélèvement d'énergie, par la batterie basse tension, sur les moyens de stockage à haut potentiel énergétique.

Avantageusement, le procédé peut être mis en oeuvre dans un véhicule, l'intervalle de temps calculé à l'étape b étant déterminé par les conditions de roulage dudit véhicule. Ainsi, la charge de la batterie basse tension étant optimisée, l'autonomie du véhicule en mode de propulsion électrique est accrue tout en préservant la durée de vie des moyens de stockage.

Selon un premier mode de réalisation du procédé appliqué à un véhicule à propulsion électrique, les conditions de roulage du véhicule sont déterminées par la mesure de la vitesse du véhicule, l'évolution de celle-ci au cours du temps et l'analyse de ces données à l'aide d'une base statistique. Ce mode de réalisation est plus particulièrement adapté à un véhicule dont le mode de propulsion est majoritairement ou exclusivement électrique.

Selon un autre mode de réalisation du procédé appliqué à un véhicule comportant un dispositif de géolocalisation, l'intervalle de temps déterminé à l'étape b est calculé à partir de données issues du ce dispositif de géolocalisation. Ce mode de réalisation est plus particulièrement, mais pas exclusivement, adapté aux véhicules hybrides dans lesquels les modes de propulsions peuvent être alternés ou combinés et où les conditions de roulage en termes de vitesse et de puissance transmise dans la propulsion ne sont pas toujours corrélées avec la sollicitation des moyens de stockage à haut potentiel énergétique.

Ces deux modes de réalisation du procédé appliqué à un véhicule comprenant une propulsion électrique peuvent être combinés.

L'invention sera maintenant plus précisément décrite dans le cadre de ses modes de réalisation préférés, nullement limitatifs, et des figures 1 à 3, dans lesquelles :

- la figure 1 ; représente de manière schématique en vue de dessus et en coupe un véhicule automobile comprenant un dispositif selon un exemple de réalisation du dispositif objet de l'invention ;
- la figure 2, est un logigramme du procédé selon l'invention et
- la figure 3 montre un exemple d'extrapolation temporelle de la température des moyens de stockage à haut potentiel énergétique.

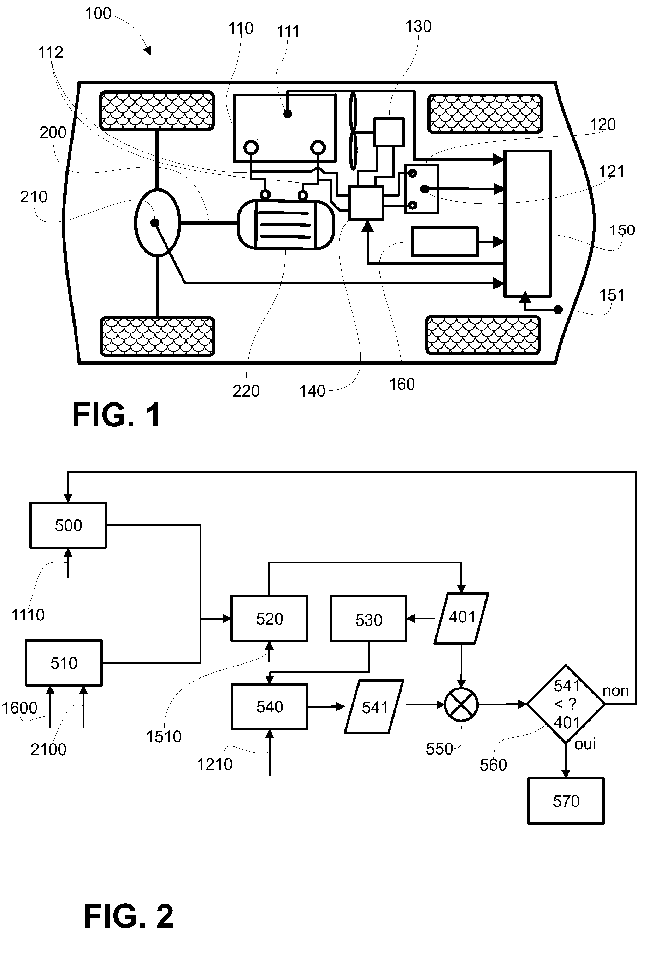

Figure 1, selon un exemple de réalisation appliqué à un véhicule automobile 100, le dispositif objet de l'invention comprend des moyens de stockage d'énergie électrique à haut potentiel énergétique 110, lesquels fournissent en énergie, par un circuit de puissance 112, un groupe motopropulseur électrique 220 dont la puissance est utilisée pour mouvoir le véhicule par l'intermédiaire d'un train de propulsion 200. Pour une application dans un véhicule automobile, les moyens de stockage à haut potentiel énergétique 110 prennent plus souvent, mais pas exclusivement, la forme d'une batterie haute tension, généralement basée sur la technologue lithium-ion. Le circuit de puissance 112 comporte également une dérivation vers un transformateur / répartiteur pilotable 140, qui permet de transformer la tension issue de la batterie haute tension en une tension apte à recharger une batterie basse tension 120 et à alimenter un moto-ventilateur 130, lequel permet de refroidir la batterie haute tension 110 par brassage d'air. D'autre part, le transformateur / répartiteur 140 comprend des moyens de connexion pilotables (non représentés), de sorte qu'il peut alimenter le moto-ventilateur 130 par l'énergie électrique issue de la batterie haute tension ou par la batterie basse tension 120 ainsi qu'alimenter cette dernière en énergie électrique issue de la batterie haute tension 110. Lorsque le groupe motopropulseur est à l'arrêt et que la batterie basse tension 120 alimente le moto-ventilateur 130, le circuit de puissance 112 est ouvert.

Le transformateur / répartiteur 140 est piloté par un superviseur 150, lequel collecte des données par différents capteurs. Ainsi, selon un exemple de réalisation, le superviseur utilise un capteur de température 111 pour mesurer la température de la batterie haute tension 110, un capteur de tension électrique 121 pour mesurer l'état de charge de la batterie basse tension, un capteur 210 approprié pour mesurer la vitesse du véhicule, ainsi qu'un capteur 151 pour mesurer la température ambiante. Le superviseur 150 reçoit également des informations sur la géolocalisation du véhicule, en étant par exemple connecté au dispositif de navigation 160 du véhicule.

Figure 2, selon un exemple de réalisation la première étape 500 du procédé objet de l'invention consiste à mesurer la température 1110 de la batterie haute tension 110. Cette étape, comme les autres étapes du procédé est mise en oeuvre par le superviseur 150 qui comprend des moyens de mémoire, de calcul, ainsi que d'acquisition et de traitement du signal. La température 1110 est mesurée par au moins un capteur 111 celui - ci mesurant directement la température de la batterie haute tension. De manière additionnelle, un ou plusieurs capteurs complémentaires (non représentés) peuvent être utilisés pour mesurer la température du fluide caloporteur utilisé pour le refroidissement de ladite batterie.

Dans une étape 510 se déroulant parallèlement à la précédente, l'intervalle de temps séparant l'instant présent de la prochaine coupure de fonctionnement est calculé à partir d'informations telles que la vitesse 2100 du véhicule, mesurée par le capteur de vitesse 210, ou telle que la localisation 1600 du véhicule 100, laquelle localisation est issue des moyens de navigation 160 dudit véhicule. Par exemple, si le superviseur 150 détecte des variations de vitesses importantes, la vitesse maximale étant inférieure ou égale à 50 km/h, il en déduit qu'il s'agit d'un parcours de type urbain et que sa durée sera statistiquement de l'ordre de dix minutes. Si au contraire il détecte une vitesse stabilisée et supérieure ou égale à 100 km/h il en déduit qu'il s'agit d'un parcours autoroutier dont la durée moyenne est statistiquement de l'ordre d'une heure. Alternativement, connaissant la destination probable et la vitesse moyenne sur le parcours par le système de navigation 160 du véhicule, le superviseur en déduit l'intervalle de temps séparant l'instant présent de la future coupure de fonctionnement.

Les données statistiques peuvent être établies sous forme de tables ou corrélées à des comportements complexes mesurés au travers des variations de vitesse, par des techniques d'intelligence artificielle ou par apprentissage telle que des réseaux de neurones ou des modélisations récursives.

Connaissant cet intervalle de temps et la température 1110 de la batterie haute tension 110, une étape d'extrapolation 520 pend avantageusement en compte la température extérieure 1510 et permet de calculer la température probable de la batterie haute tension au moment de la coupure du fonctionnement.

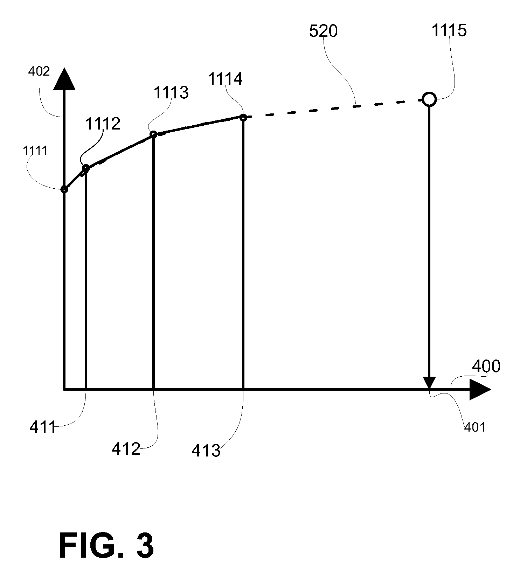

Selon un exemple d'extrapolation, figure 3, celle-ci est obtenue en mesurant l'évolution de la température 402 de la batterie haute tension en fonction du temps 400. Ainsi, à l'instant initial une température 1111 initiale de la batterie haute tension est mesurée. Cette température augmente au cours du temps pour atteindre une deuxième température 1112 après un premier laps de temps 410. Une troisième 1113 et une quatrième 1114 températures sont atteintes après un deuxième 411 et un troisième 412 laps de temps. À partir de cette mesure, la température est extrapolée 520 par une fonction mathématique déterminée jusqu'à la température 1115 correspondant à l'instant 401 de la coupure de fonctionnement présumée.

En revenant à la figure 2, la connaissance de la température 1115 de la batterie haute tension à l'instant présumé 401 de la coupure de fonctionnement, permet, dans une étape de calcul 530, de déterminer la quantité d'énergie nécessaire pour refroidir la batterie haute tension et ramener celle-ci dans des conditions thermiques non dommageables pour sa durée de vie.

Par exemple, si l'on note E l'énergie nécessaire pour refroidir la batterie haute tension 110, M la masse de la batterie haute tension, Cp la capacité calorifique de ladite batterie, $T_A$ la température 1115 calculée de la batterie au moment de la coupure de fonctionnement et $T_c$ la température visée de la batterie haute tension à l'issue du refroidissement, alors :

$$E = M.Cp.(T_A - T_c)$$

La connaissance de cette quantité énergie E à l'issue de cette étape de calcul, permet au cours d'une autre étape de calcul utilisant notamment l'information 1210 de l'état de charge de batterie basse tension de calculer 540 le besoin en charge de ladite batterie basse tension et d'en déduire le temps de charge nécessaire 541.

Le temps de charge est obtenu en comparant l'état de charge de la batterie basse tension avec la quantité d'énergie nécessaire au refroidissement de la batterie haute tension, en prenant pour cible un taux de charge optimum de la batterie basse tension.

En comparant, le temps nécessaire à cette charge 541 et l'intervalle de temps restant 401 jusqu'à la coupure présumée du fonctionnement, une étape de comparaison 550 compare le temps de charge 541 et le temps 401 jusqu'à la coupure de fonctionnement, et une étape de test 560 détermine si le temps de charge 541 est inférieur ou égal à l'intervalle de temps 401 déterminé précédemment. Dans le cas où le test 560 est positif le superviseur déclenche une étape 570 de charge de la batterie basse tension. Dans le cas contraire le processus est reconduit depuis le début.

Pour recharger la batterie basse tension 120, le superviseur 150 pilote le transformateur / répartiteur 140 de sorte qu'une partie de la puissance de la batterie haute tension serve à charger la batterie basse tension.

Lorsque le véhicule s'arrête et que le fonctionnement est coupé, le superviseur, par l'intermédiaire du transformateur / répartiteur 140 ouvre le circuit de puissance 112 et alimente le moto-ventilateur 130 par la batterie basse tension 120 pour assurer le refroidissement de la batterie haute tension 110.

L'homme du métier adaptera sans difficulté d'autres variantes de réalisation. Par exemple, le moto-ventilateur peut être remplacé par une pompe hydraulique faisant circuler un fluide caloporteur pour le refroidissement de moyens de stockage à haut potentiel énergétique. Alternativement un circuit de refroidissement liquide peut être utilisé, la batterie basse tension alimentant un ventilateur permettant d'accélérer le refroidissement dudit liquide dans un radiateur. La charge de la batterie basse tension peut être réalisée par un générateur mis en mouvement par le groupe motopropulseur 220 ou par un groupe motopropulseur à combustion interne si le véhicule 100 est un véhicule hybride.

La description ci-avant illustre clairement que par ses différentes caractéristiques et leurs avantages, la présente invention atteint les objectifs visés. En particulier, elle permet d'optimiser l'instant de la charge d'une batterie basse tension pour le refroidissement de moyens de stockage à haut potentiel énergétique en maîtrisant la consommation énergétique du dispositif.

**Revendications**

1. Procédé pour le refroidissement de moyens de stockage d'énergie électrique à haut potentiel énergétique (110) **caractérisé en ce qu'**il comprend :

   - une étape de refroidissement des moyens de stockage (110) lorsque ceux-ci sont en fonctionnement et délivrent un courant électrique dans un circuit de puissance (112) ;
   - une étape de refroidissement des moyens de stockage (110) lorsqu'ils ne délivrent plus de courant électrique, cette étape mettant en oeuvre une batterie dite basse tension (120),
   et **en ce qu'**il comprend, alors que les moyens de stockage sont en fonctionnement, des étapes consistant à :

      a. mesurer la température (1110, 1111, 1112, 1113) des moyens de stockage à haut potentiel énergétique (110) lorsque lesdits moyens sont en fonctionnement ;
      b. déterminer un intervalle de temps (401) jusqu'à la prochaine coupure de fonctionnement des moyens de stockage à haut potentiel énergétique ;
      c. extrapoler (520) la température (1115) atteinte par les moyens de stockage lors de ladite prochaine coupure de fonctionnement ;

d. calculer (530) l'énergie nécessaire pour ramener les moyens de stockage à une température nominale définie après la coupure de fonctionnement ;

e. mesurer (540) l'état de charge (1210) de la batterie basse tension pour en déduire un besoin de charge en regard de l'énergie nécessaire déterminée à l'étape d ainsi que le temps de charge (541) nécessaire pour effectuer une charge correspondant à ce besoin ;

f. comparer (550) le temps de charge nécessaire (541) avec l'intervalle de temps (401) déterminé à l'étape b ;

g. déclencher (570) la charge de la batterie basse tension si le temps de charge (531) est supérieur ou égal à l'intervalle de temps (401) déterminé à l'étape b.

2. Procédé selon la revendication 1 mis en oeuvre dans un véhicule **caractérisé en ce que** l'intervalle de temps (401) calculé à l'étape b est déterminé par les conditions de roulage du véhicule.

3. Procédé selon la revendication 2 **caractérisé en ce que** les conditions de roulage du véhicule sont déterminées par la mesure de la vitesse (2100) du véhicule, de l'évolution de celle-ci au cours du temps et de l'analyse de ces données à l'aide d'une base statistique.

4. Procédé selon la revendication 2 **caractérisé en ce que** le véhicule comprend un dispositif de géolocalisation (160) et que l'intervalle de temps déterminé à l'étape b est calculé à partir de données issues du dispositif de géolocalisation.

## Patentansprüche

1. Verfahren zur Kühlung von Stromspeichermitteln mit hohem energetischem Potenzial (110), **dadurch gekennzeichnet, dass** es umfasst:

- einen Schritt der Kühlung der Speichermittel (110), wenn diese in Betrieb sind und Strom in eine Leistungsschaltung (112) liefern;
- einen Schritt der Kühlung der Speichermittel (110), wenn sie keinen Strom mehr liefern, wobei dieser Schritt eine so genannte Niederspannungsbatterie (120) einsetzt,

und dass es, wenn die Speichermittel in Betrieb sind, Schritte umfasst, darin bestehend:

a. die Temperatur (1110, 1111, 1112, 1113) der Speichermittel mit hohem energetischem Potenzial (110) zu messen, wenn die Mittel in Betrieb sind;

b. ein Zeitintervall (401) bis zur nächsten Betriebsunterbrechung der Speichermittel mit hohem energetischem Potenzial zu bestimmen;

c. die von den Speichermitteln während der nächsten Betriebsunterbrechung erreichte Temperatur (1115) zu extrapolieren (520);

d. die notwendige Energie, um die Speichermittel auf eine nach der Betriebsunterbrechung definierte Nominaltemperatur zurückzuführen, zu berechnen (530);

e. den Ladezustand (1210) der Niederspannungstemperatur zu messen (540), um davon einen Ladebedarf im Hinblick auf die in Schritt d bestimmte erforderliche Energie sowie die Ladezeit (541) abzuleiten, die für das Laden entsprechend diesem Bedarf notwendig ist;

f. die notwendige Ladezeit (541) mit dem in Schritt b bestimmten Zeitintervall (401) zu vergleichen (550);

g. das Laden der Niederspannungsbatterie auszulösen (570), wenn die Ladezeit (531) größer oder gleich einem in Schritt b bestimmten Zeitintervall (401) ist.

2. Verfahren nach Anspruch 1, das in einem Fahrzeug eingesetzt wird, **dadurch gekennzeichnet, dass** das Zeitintervall (401), das in Schritt b berechnet wurde, durch die Fahrbedingungen des Fahrzeugs bestimmt wird.

3. Verfahren nach Anspruch 2, **dadurch gekennzeichnet, dass** die Fahrbedingungen des Fahrzeugs durch das Messen der Geschwindigkeit (2100) des Fahrzeugs, der Entwicklung derselben mit der Zeit und der Analyse dieser Daten mit Hilfe einer statistischen Basis bestimmt werden.

4. Verfahren nach Anspruch 2, **dadurch gekennzeichnet, dass** das Fahrzeug eine Vorrichtung zur Geolokalisierung (160) umfasst, und dass das in Schritt b bestimmte Zeitintervall auf Basis von Daten, die von der Geolokalisierungsvorrichtung stammen, berechnet wird.

## Claims

1. A method for cooling electricity storage means with high capacity (110), **characterized in that** it includes:

- a step of cooling the storage means (110) when the latter are in operation and are delivering an electric current in a power circuit (112);
- a step of cooling the storage means (110) when they are no longer delivering electric current, this step using a low voltage battery (120),

and **in that** it includes, while the storage means are in operation, steps consisting of:

    a. measuring the temperature (1110, 1111, 1112, 1113) of the high capacity storage means (110) when said means are in operation;
    b. determining a time interval (401) until the next cutoff of operation of the high capacity storage means;
    c. extrapolating (520) the temperature (1115) reached by the storage means at said next cutoff of operation;
    d. calculating (530) the energy necessary to bring the storage means back to a defined nominal temperature after the cutoff of operation;
    e. measuring (540) the charge status (1210) of the low voltage battery to deduce therefrom a need for charging with regard to the necessary energy determined at step d and the charge time (541) necessary to carry out a charge corresponding to this need;
    f. comparing (550) the necessary charge time (541) with the time interval (401) determined at step b;
    g. triggering (570) the charge of the low voltage battery if the charge time (531) is greater than or equal to the time interval (401) determined at step b.

2. The method according to Claim 1, implemented in a vehicle **characterized in that** the time interval (401) calculated at step b is determined by the driving conditions of the vehicle.

3. The method according to Claim 2, **characterized in that** the driving conditions of the vehicle are determined by the measurement of the speed (2100) of the vehicle, the evolution of the latter over time and the analysis of these data by means of a statistical base.

4. The method according to Claim 2, **characterized in that** the vehicle includes a geolocation device (160) and that the time interval determined at step b is calculated from data generated from the geolocation device.

**FIG. 1**

**FIG. 2**

**FIG. 3**

**EP 2 596 543 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009024252 A